Europäisches Patentamt

European Patent Office

Office européen des brevets

(11) Publication number: 0 421 504 B1

# EUROPEAN PATENT SPECIFICATION

(45) Date of publication of patent specification: 24.05.95    (51) Int. Cl.6: **A23D 7/00, A23C 15/12**

(21) Application number: 90202362.1

(22) Date of filing: 06.09.90

(54) **Spreads containing chlorophyll.**

(30) Priority: **02.10.89 GB 8922170**

(43) Date of publication of application:
**10.04.91 Bulletin 91/15**

(45) Publication of the grant of the patent:
**24.05.95 Bulletin 95/21**

(84) Designated Contracting States:
**AT BE CH DE DK ES FR GB GR IT LI NL SE**

(56) References cited:
EP-A- 0 148 303    EP-A- 0 155 246
EP-A- 0 244 009    EP-A- 0 315 245
EP-A- 0 329 543    EP-A- 0 369 519
AU-A- 482 193    DE-A- 3 739 700
US-A- 4 961 950

AUSTRALIAN JOURNAL OF DAIRY TECHNOLOGY, vol. 35, no. 2, June 1980, PARKVILLE, AU, pages 43-47; B.D. DIXON ET AL: 'a comparison of five methods of production of dairy blend'

J.F. CARTER: "Sunflower science and tecnology", 1978, AMERICAN SOCIETY OF AGRONOMY, Madison, Wisconsin, US, pp. 416-417

(73) Proprietor: **UNILEVER N.V.**
**Weena 455**
**NL-3013 AL Rotterdam (NL)**

(84) Designated Contracting States:
**BE CH DE DK ES FR GR IT LI NL SE AT**

(73) Proprietor: **UNILEVER PLC**
**Unilever House**
**Blackfriars**
**London EC4P 4BO (GB)**

(84) Designated Contracting States:
**GB**

(72) Inventor: **Decio, Maurizio, c/o Unilever Research Laboratory**
**Olivier van Noortlaan 120**
**NL-3133 AT Vlaardingen (NL)**
Inventor: **De Jong, Frederick Roelof, c/o Unilever Res. Lab.**
**Olivier van Noortlaan 120**
**NL-3133 AT Vlaardingen (NL)**

(74) Representative: **Mulder, Cornelis Willem Reinier, Dr. et al**
**UNILEVER N.V.**
**Patent Division**
**P.O. Box 137**
**NL-3130 AC Vlaardingen (NL)**

## Description

The present invention concerns the technical field of edible spreads.

The present invention relates to edible water-in-oil emulsions containing chlorophyll, particularly to blends comprising butterfat and unrefined vegetable oil suitable for use as spreads on bread and for kitchen use, and in particular embodiments to spreads containing unrefined olive oil and butterfat.

Manufacture of olive oil for human or animal consumption requires nothing other than expression of the oil from the oil bearing materials and clarification of the oil by filtration. Such a process commonly includes so called cold-pressing and the product is referred to as "virgin olive oil". Commercial olive oil is often a blend of olive oils from a number of different sources, some or much of which may be refined olive oil. Blends of around 10-20%wt virgin olive oil and around 80-90% refined olive oil are available in the marketplace as "olive oil".

Olive oil is described in BAILEY ("Industrial Oil and Fat Products": Wiley, Fourth Edition, Volume 1 page 368ff) as unique in that it is used (as a dressing) for it's flavour whereas the other edible oils are refined prior to use. Many examples of refining processes are given in BAILEY (cit. ultra) as are examples of the off-flavour components which are generated on storage of unrefined edible oils.

Unrefined vegetable oils are characterised by the presence of quite large amounts of tocopherols (vitamin E family) and colouring agents other than chlorophylls, especially $\beta$-carotenes (closely related to vitamin A).

It is believed that the tocopherols may have some anti-oxidative activity, and both the vitamin components are reported to have nutritive value. While the carotenoids are moderately resistant to decomposition, chlorophyll is particularly sensitive to the refining process. Hence although chlorophyll is present in many unrefined vegetable oils it is removed or decomposed during refining.

Olive oil is particularly rich in chlorophyll, which contributes to the characteristic colour of the oil. The level of chlorophyll in the oil varies with the state of maturation of the olives from which the oil has been expressed, in quantities ranging from 1-10 mg/kg, with a typical value of around 2.5 mg/kg. Certain other oils and fats have similar levels of chlorophyll, for example crude soybean oil has 0.4-5.0 mg/kg and rapeseed oil may comprise up to 10 mg/kg of chlorophyll.

Refining processes such as are commonly used for edible oils and fats comprise a plurality of steps, such as degumming, neutralising, bleaching and deodorising. Chlorophyll is particularly sensitive to these refining processes and is normally lost during the degumming and bleaching steps. With soyabean oil the level of chlorophyll is lowered during bleaching to below 0.1 mg/kg. Other components such as gossypol, carotenoids and cycloartenol are lost during the refining process. The level of tocopherols is reduced, particularly during deodorisation. As a consequence of these losses manufacturers commonly add back carotenoids and tocopherols to maintain colour, prevent oxidation and for nutritional reasons.

EP-A-0 155 246 relates to modifying emulsions and in particular dairy spreads like butter in order to modify the spreadability at refrigeration temperature. This is achieved by using both hardened and unhardened vegetable fats, the latter having preferably a high amount of linolenic acid. Up to 30% unhardened fat can be used on the total amount of fat.

EP-A-0 329 543 describes enriching fresh cream and butter with polyunsaturated fatty acids by adding a suitable unhardened vegetable oil rich in polyunsaturated fatty acids like sunflower oil.

EP-A-0 369 519 relates to edible emulsions containing non-chemically modified fat, that is to say hydrogenation (or hardening), interesterification and saponification.

Introducing, using or whatever other application of chlorophyll is not described or suggested in any of these documents and using unrefined vegetable oil in butter spreads is not disclosed either.

Margarine formulations often contain a proportion of high-melting fat to provide body and structure. These "hardstocks" are obtained by the chemical hydrogenation of liquid oils and as a result of the hydrogenation process contain trans fatty acid residues. Some consumers find the presence of trans fatty acids unacceptable. Chlorophyll is not usually completely bleached in the hydrogenation process, whereas the other colouring agents naturally present in the feedstock (red and yellow pigments) are either removed or readily reduced during hydrogenation. As a result of this difference fats containing both chlorophyll and other colouring agents change colour when hydrogenated unless special catalysts (copper chromates) are employed.

Most margarine formulations also contain emulsifiers. These are usually selected from lecithins, saturated monoglycerides and unsaturated mono-glycerides and mixtures of the same. The presence of these emulsifier additives is unacceptable to some consumers.

There is a general need in the edible spreads industry to find product formulations which have a minimum number of components and in which the components have been subjected to a minimum number

2

of process steps.

We have determined that when particular formulations are employed, the above mentioned refining processes are not necessary and unrefined, unhydrogenated, i.e cold-pressed, vegetable oils can be used in the manufacture of products which contain no added emulsifier and little or no trans fatty acids.

According to the present invention there is provided an edible water-in-oil emulsion spread comprising a dispersion of oil and water CHARACTERISED IN THAT at least 0.5 ppm chlorophyll is dispersed in the oil phase.

The presence of chloroophyll in products which contain no trans fat is characteristic of unrefined, unhydrogenated oils. While chlorophyll has previously present in spreads by virtue of the incorporation of particles of vegetable matter, such as parsley as in "beurre a la Maitre d'Hotel", or "beurre a la Chivry", the chlorophyll was not homogenously distributed in the fat phase of an oil and water emulsion.

Compositions according to the present invention are preferably free of particulate vegetable matter such as herb or leaf fragments.

In preferred embodiments of the invention the concentration of chlorophyll does not exceed 15mg/kg (ppm) on liquid oil content at 10°C.

Typically, the relation between the level of chlorophyll and the production of oil liquid at 10°C is such that the chlorophyll content is at least 1 ppm on liquid oil content at 10°C.

We have found that the presence of such levels of chlorophyll in spreads does not influence the colour or organoleptic properties of the product in a negative sense. Although the products are noticeably greenish in comparative tests, single instance inspection of the product does not lead to a "green" response. Preferred ranges for chlorophyll are 1-5 ppm on product.

While it is possible to employ a single vegetable fat as the sole component of a spread, it is preferable to manufacture a spread from a blend of fats so as to achieve the necessary hardness. In particular, we have found that blends of butterfat and unrefined vegetable oil give good results. The butterfat may be obtained as anhydrous butterfat and used as such, but the use of unmodified butter is preferred.

Butterfat is chemically distinct from the vegetable fats and oils. In particular, butter contains very little or no chlorophyll, is richer in short chain fatty acids and contains more saturated fat than liquid vegetable oils. Blend of butterfat and edible oils are softer than butter and generally contain lesser proportions of saturated fats. Many medical authorities recommend that the human diet should contain less saturated fat than is currently the case.

Vegetable fats may be used as alternative hard fats to butter. Suitable fats may be obtained by a range of techniques including fractionation, hydrogenation and interesterification or combinations of these techniques.

As was noted above, some consumers find trans fatty acids unacceptable. While trans fatty acids are produced by incomplete hydrogenation of fats, as is commonly performed in the edible fats industry, the trans fatty acids also occur naturally in butter. Gunston Harwood and Padley (the "Lipid Handbook": Chapman and Hall, page 113) report levels of 4-8% trans fatty acids as the elaidate. There are few other sources of trans fats in nature. Where hydrogenated fats are employed care should be taken to minimise the trans fatty acid content.

No emulsifiers, thickeners, colouring agents, preservative or plastifiers are required in the formulations according to the present invention. The butter and unrefined oil are comprise sufficient natural emulsifier components to stabilise the product without further additions.

Preferably the unrefined vegetable oil is olive oil, and the unrefined oil content of the blend lies in the range 5-60%wt on total fat content, most preferably around 30% on total fat content. Some medical authorities consider that olive oil is preferable to other vegetable oils as a foodstuff: in particular due to the high content of mono-unsaturated fatty acid residues and possibly due to the presence of low levels of other nutritional components.

Typical formulations therefore comprise blends of 5-60% extra virgin olive oil and 95-40% butter. In particular embodiments of the invention blends of 25-35% olive oil and 75-65% butter are employed. For butter the contents of saturated, mono-unsaturated and poly-unsaturated fatty acids are markedly inclined towards high saturated fatty acid contents; reported values are 60-70% saturated fatty acids, 25-30% mono-unsaturated fatty acids and up to 5% of poly-unsaturated fatty acids. Olive oil is particularly rich in mono-unsaturated fatty acids, having a reported content of 65-80% oleic acid. The remaining major components of olive oil are 4-15% linoleic acid and 9-18% saturated fatty acids. Blends of olive oil and butterfat comprising 30% olive and 70% butterfat would have a typical content as follows:

| Saturated fatty acids: | 48% |
|---|---|
| Mono-unsaturated fatty acids: | 42% |
| Poly-unsaturated fatty acids: | 10% |

As an alternative, the vegetable oils can be an unrefined vegetable oil selected from the group comprising; sunflower, soybean, safflower, sesame, mustard, rapeseed, grapeseed and mixtures of the same. Both high or low oleic oils can be used, where these varieties exist.

These oils are suitable for inclusion in relatively large amounts. Moreover these oils comprise relatively large amounts of poly-unsaturated fatty acids, and the resulting blends would generally be richer in poly-unsaturated fatty acids than the comparable blends of olive oil and butter. These oils are preferably used at a level of 5-60% on product.

Olive oil comprises some 10% of linoleic acid residues, whereas sunflower oils suitable for cold use comprise some 55-70% linoleic acid, and soybean oils around 50-65% linoleic acid; consequently a blend of 10% olive with 90% of these two vegetable oils comprises around and preferably more than 50% linoleic acid residues, around 10-35% mono-unsaturated fatty acid residues and relatively low levels of saturated fatty acids. Such a blend may be used in combination with butterfat and/or butter.

Other oils and fats may be incorporated into the formulation. For example chufa (an oil rich in mono-unsaturated fatty acids), groundnut (aka 'peanut', comprising around 55% oleic acid), walnut, almond, hazelnut and/or other flavored oils can be used as minor amounts of the overall fat blend.

In order that the present invention may be better understood the following illustrative examples are given.

EXAMPLES

EXAMPLE 1

A spread comprising 10% unrefined olive oil on total fat content was prepared as follows.

3600 grams of Dutch butter and 400 grams of unrefined, cold-pressed olive oil were combined at 40°C and stirred well. No further additives were used. The resulting emulsion was processed through an ACAB Votator (RTM) sequence with a throughput of 4.0 kg/hr. Details of the line operation conditions were as follows:

| A1 | 500rpm | Exit temperature 5.9°C |
|---|---|---|
| C | 250rpm | Exit temperature 11.2°C |
| A2 | 800rpm | Exit temperature 4.3°C |

The product was packed in foil wrappers.

C-values (hardness at indicated temperature) for the product were C5-2350, C10-1950, C15-880, C20-75. The product had a slight green tinge when compared with spreads manufactured from refined oils, but this colour was not particularly noticeable when the product was inspected in isolation. The product had a characteristic olive flavour but was very palatable. The product gave good results when used as a condiment for pasta, in shallow frying, basting and as a base for sauces.

Products exhibited the following solids fat indices when analysed after stabilization for 1 hr. at 0°C and 16 hrs. at 0°C. The chlorophyll content on product, was 0.9 ppm.

Table 1

|  | N5 | 10 | 20 | 30 | 40 |
|---|---|---|---|---|---|
| 1 hr. 0°C | 44.1 | 36.5 | 12.4 | 2.2 | 0.0 |
| 16 hrs. 0°C | 47.9 | 40.0 | 12.2 | 2.7 | 0.0 |

EXAMPLE 2

A spread comprising 30% unrefined olive oil on fat phase was prepared as follows.

2800 grams of Dutch butter and 1200 grams of unrefined, cold-pressed olive oil were combined at 40°C and stirred well. No further additives were used. The resulting emulsion was processed through an AAC Votator (RTM) sequence with a throughput of 4.0 kg/hr. Details of the line operation conditions were as follows:

| A1 | 600rpm | Exit temperature 5.0°C |
|----|--------|------------------------|
| A2 | 600rpm | Exit temperature 7.0°C |
| C  | 250rpm | Exit temperature 11.9°C |

The product was packed in tubs.

C-values (hardness at indicated temperature) for the product were C5-1235, C10-790, C15-240, C20-42. As with the above mentioned example the product had a slight green tinge when compared with spreads manufactured from refined oils, but again this colour was not particularly noticeable when the product was inspected in isolation. The product had a strong and characteristic olive flavour but was very palatable.

Products exhibited the following solids fat indices when analysed after stabilization for 1 hr. at 0°C and 16 hrs. at 0°C. The chlorophyll content on product was 2.5 ppm.

Table 2

|             | N5   | 10   | 20  | 30  | 40  |
|-------------|------|------|-----|-----|-----|
| 1 hr. 0°C   | 32.0 | 25.6 | 7.9 | 1.0 | 0.0 |
| 16 hrs. 0°C | 36.7 | 28.7 | 7.5 | 1.1 | 0.0 |

EXAMPLE 3

Example 3 was performed with the following compositions; using whole butter as the source of both butterfat and butter serum:

|                          | Example |       |       |       |
|--------------------------|---------|-------|-------|-------|
|                          | 3A      | 3B    | 3C    | 3D    |
| Butterfat                | 60      | 60    | 70    | 60    |
| Virgin Olive Oil         | 40      | 7     | -     | -     |
| Refined Olive Oil        | -       | 33    | -     | -     |
| Unrefined soybean        | -       | -     | -     | 40    |
| Unrefined Sunflower Oil  | -       | -     | 30    | -     |
| (total fat)              | 80.0    | 80.0  | 80.0  | 80.0  |
| Butter serum             | 9.20    | 9.20  | 10.80 | 9.20  |
| Salt (NaCl)              | 0.30    | 0.30  | 0.30  | 0.30  |
| Potassium Sorbate        | 0.10    | 0.10  | 0.10  | 0.10  |
| Water                    | 10.40   | 10.40 | 8.80  | 10.40 |
| (total aqueous           | 20.0    | 20.0  | 20.0  | 20.00 |

In all cases the waterphase was brought to a pH of 4.2 with 10% w/w citric acid. The butter was melted at 50°C and blended with the oils in a thermostatted, water jacketed tank. Aqueous phases were prepared by dissolving salt and sorbate in boiling water and cooling to 40°C, at which temperature the fatty and aqueous phases were mixed. The premix was cooled and worked into a spread by means of a so-called "A-A-C" sequence of Votator (RTM) units using the following processing conditions; at a throughput of 3.5 kg/hr.

5

```
         PREMIX ------> A ------> A ------> C
Exit temp.                5.0       6.5       13.5
rotation speed:          1000       800        250
coolant temperature       -5         -1         --
volume:                                         150
```

As with the previous examples the product had a slightly different colour to a conventional spread. However, the products were otherwise acceptable.

The chlorophyll contents of the products were as follows:

|  | 3A | 3B | 3C | 3D |
|---|---|---|---|---|
| Chlorophyll ppm | 3.4 | 0.7 | $\approx$4.0 | 4.2 |

## Claims

1. An edible water-in-oil emulsion spread comprising a dispersion of oil and water CHARACTERISED IN THAT at least 0.5 ppm chlorophyll on fat phase is dispersed in the fat phase thereof.

2. Emulsion according to claim 1 wherein chlorophyll is present at a level of less than 15ppm on fat phase,

3. Emulsion according to claim 2 wherein the chlorophyll content and the proportion of oil liquid at 10°C are such that the chlorophyll content is at least 1 ppm on liquid oil content at 10°C.

4. Emulsion according to any of the proceeding claims comprising a blend of butterfat and unrefined vegetable oil.

5. Emulsion according to claim 4 wherein the unrefined vegetable oil is olive oil.

6. Emulsion according to claim 5 wherein the olive oil content of the blend lies in the range 5-60%wt on the fat phase content of the emulsion.

7. Emulsion according to claim 6 comprising 25-35% olive oil and 75-65% butterfat on fat phase.

8. Emulsion according to any of the proceeding claims comprising an unrefined vegetable oils selected from the group comprising; sunflower, soybean, safflower, sesame, mustard, rapeseed, grapeseed oils and mixtures thereof.

9. Emulsion according to claim 8 further comprising one or more vegetable oils selected from the group comprising walnut, groundnut, chufa, hazelnut, walnut and mixtures thereof.

10. Emulsion according to any of the proceeding claims wherein the C-values at the indicated temperatures of the product lie in the range C5: 2500-1000, C10: 2000-750, C15: 1000-200, C20: 100-30.

11. Emulsion according to any one of the previous claims essentially free of added emulsifier.

12. Emulsion according to any one of the previous claims essentially free of trans fatty acids.

## Patentansprüche

1. Eßbarer Wasser-in-Öl-Emulsionsaufstrich, umfassend eine Dispersion aus Öl und Wasser, dadurch gekennzeichnet, daß mindestens 0,5 ppm Chlorophyll, bezogen auf die Fettphase, in dessen Fettphase dispergiert sind.

2. Emulsion nach Anspruch 1, in der das Chlorophyll in einer Konzentration von weniger als 15 ppm, bezogen auf die Fettphase, vorliegt.

3. Emulsion nach Anspruch 2, bei der der Chlorophyllgehalt und der Anteil an bei 10°C flüssigem Öl so bemessen sind, daß der Chlorophyllgehalt mindestens 1 ppm, bezogen auf den Gehalt des bei 10°C flüssigen Öles, beträgt.

4. Emulsion nach irgendeinem der vorhergehenden Ansprüche, umfassend ein Gemisch aus Butterfett und unraffiniertem pflanzlichen Öl.

5. Emulsion nach Anspruch 4, bei der das unraffinierte pflanzliche Öl Olivenöl ist.

6. Emulsion nach Anspruch 5, bei der der Olivenölgehalt des Gemisches im Bereich von 5 bis 60 Gew.-%, bezogen auf den Fettphasengehalt der Emulsion, liegt.

7. Emulsion nach Anspruch 6, umfassend 25 bis 35 % Olivenöl und 75 bis 65 % Butterfett, bezogen auf die Fettphase.

8. Emulsion nach irgendeinem der Vorhergehenden Ansprüche, umfassend ein unraffiniertes pflanzliches Öl, ausgewählt aus der aus Sonnenblumen-, Soja-, Safflor-, Sesam-, Senf-, Raps-, Traubenkernöl und Mischungen davon bestehenden Gruppe.

9. Emulsion nach Anspruch 8, die ferner ein oder mehrere pflanzliche Öle, ausgewählt aus der Walnuß-, Erdnuß-, Chufa-, Haselnußöl und Mischungen davon beinhaltenden Gruppe, umfaßt.

10. Emulsion nach irgendeinem der vorhergehenden Ansprüche, bei der die C-Werte des Produktes bei den angegebenen Temperaturen im Bereich von $C_5$ = 2500 bis 1000, $C_{10}$ = 2000 bis 750, $C_{15}$ = 1000 bis 200, $C_{20}$ = 100 bis 30 liegen.

11. Emulsion nach irgendeinem der Vorhergehenden Ansprüche, die von zugefügtem Emulgator im wesentlichen frei ist.

12. Emulsion nach irgendeinem der vorhergehenden Ansprüche, die von trans-Fettsäuren im wesentlichen frei ist.

## Revendications

1. Un produit à tartiner comestible d'émulsion eau-dans-huile et contenant une dispersion d'huile et d'eau, caractérisé en ce qu'au moins 0,5 ppm de chlorophylle par rapport à la phase grasse est dispersé dans la phase grasse de celui-ci.

2. Un produit à tartiner selon la Revendication 1, dans lequel la chlorophylle est présente dans une proportion inférieure à 15 ppm par rapport à la phase grasse.

3. Un produit à tartiner selon la Revendication 2, dans lequel la teneur en chlorophylle et la proportion d'huile liquide à 10° C sont telles que la teneur en chlorophylle est au moins égale à 1 ppm par rapport à la teneur en huile liquide à 10° C.

4. Un produit à tartiner selon l'une quelconque des Revendications précédentes et comprenant un mélange de graisse de beurre et d'huile végétale non raffinée.

7

5. Un produit à tartiner selon la Revendication 4, dans lequel l'huile végétale non raffinée est de l'huile d'olive.

6. Un produit à tartiner selon la Revendication 5, dans lequel la teneur en huile d'olive du mélange est comprise dans la gamme allant de 5 à 60 % en masse de la teneur en phase grasse de l'émulsion.

7. Un produit à tartiner selon la Revendication 6, comprenant 25 à 35 % d'huile d'olive et 75 à 65 % de graisse de beurre en phase grasse.

8. Un produit à tartiner selon l'une quelconque des Revendications précédentes, contenant une huile végétale non raffinée sélectionnée parmi le groupe composé des huiles de tournesol, de soja, de carthame, de sésame, de moutarde, de colza, de pépins de raisin, et de mélanges de celles-ci.

9. Un produit à tartiner selon la Revendication 8, comprenant en outre une ou plusieurs huiles végétales sélectionnée(s) parmi le groupe composé d'huiles de noix, d'arachide, de chufa, de noisette, et des mélanges de celles-ci.

10. Un produit à tartiner selon l'une quelconque des Revendications précédentes, dans lequel les valeurs de C aux températures de produit indiquées sont comprises dans la gamme C5: 2 500 à 1 000, C10 : 2 000 à 750, C15 : 1000 à 200, C20 : 1000 à 30.

11. Un produit à tartiner selon l'une quelconque des Revendications précédentes, essentiellement exempt d'émulsifiant ajouté.

12. Un produit à tartiner selon l'une quelconque des Revendications précédentes, essentiellement exempt d'acides gras trans.